# EUROPÄISCHE PATENTSCHRIFT

(11) **EP 1 238 864 B1**
(45) Veröffentlichungstag und Bekanntmachung des Hinweises auf die Patenterteilung: **31.08.2005**
(21) Anmeldenummer: 01127011.3
(22) Anmeldetag: 14.11.2001
(51) Int. Cl.: B60R 21/16

(54) **Sicherheitsvorrichtung für ein Kraftfahrzeug**
Motor vehicle safety apparatus
Dispositif de sécurité pour un véhicule automobile

(30) Priorität: 10.03.2001 DE 10111566
(43) Veröffentlichungstag der Anmeldung: 11.09.2002
(73) Patentinhaber: DaimlerChrysler AG, 70567 Stuttgart (DE)
(72) Erfinder: Reiter, Friedrich, 71069 Sindelfingen (DE); Rüdebusch, Clark, 71272 Renningen (DE)

(56) Entgegenhaltungen:
- DE-A- 2 116 347
- DE-A- 19 522 765
- DE-A- 19 628 836
- DE-U- 29 720 462
- FR-A- 2 136 499
- FR-A- 2 527 803
- US-A- 5 492 363
- US-A- 5 725 244
- US-A- 5 931 497
- "CONTROLLABLE ORIFICE FOR A STORED GAS INFLATOR" RESEARCH DISCLOSURE, KENNETH MASON PUBLICATIONS, HAMPSHIRE, GB, Nr. 392, 1. Dezember 1996 (1996-12-01), Seiten 799-800, XP000682090 ISSN: 0374-4353
- PATENT ABSTRACTS OF JAPAN vol. 1997, no. 02, 28. Februar 1997 (1997-02-28) -& JP 08 268213 A (HONDA MOTOR CO LTD), 15. Oktober 1996 (1996-10-15)

## Beschreibung

Die Erfindung betrifft eine Sicherheitsvorrichtung für ein Kraftfahrzeug mit einem Gasgenerator sowie einem im Falle eines Unfalls durch den Gasgenerator zu befüllenden Gassack, und mit mindestens einer Öffnung, durch die Gas strömen kann, deren Strömungswiderstand variabel ist.

Es sind Sicherheitsvorrichtungen bekannt, die einen Gasgenerator und ein damit verbundenes Gaskissen aufweisen, wobei am Gaskissen eine Abströmöffnung mit variabler Größe angeordnet ist. So offenbart das deutsche Gebrauchsmuster DE 88 00 530 U einen Gassack, dessen Abströmöffnungen durch Schließteile aus elastischem, verformbaren Material zugesetzt sind, die mit einer Ausnehmung versehen sind. Die Ausnehmung in dem Schließteil ändert ihren Querschnitt in Abhängigkeit vom Innendruck im Gaskissen, d.h. bei maximal gefülltem Gassack ist der Querschnitt am größten und bei sich entleerendem Gassack nimmt die Größe des Querschnitts kontinuierlich ab.

Bei dieser bekannten Sicherheitsvorrichtung variiert die Größe der Abströmöffnung selbsttätig. Die Steuerung erfolgt über den Innendruck des Gassacks so, dass bei einem hohen Innendruck - beispielsweise bei einer starken Belastung des Gassacks - viel Gas entweicht und bei einem geringen Druck - also einer weniger starken Belastung des Gassacks - wenig Gas entweicht.

Für einen optimalen Schutz der Fahrzeuginsassen ist es jedoch von Vorteil, wenn bei einem stärkeren Unfall und somit einer stärkeren Belastung des Gassacks der Gassack härter ist, um mehr Energie zu absorbieren, und bei einem weniger starken Unfall und somit einer weniger starken Belastung der Gassack weicher ist. Das gleiche gilt für unterschiedliche Lastfälle aufgrund von unterschiedlich schweren Fahrzeuginsassen. Bei einem schwereren Fahrzeuginsassen, beispielsweise einem sogenannten 50%-Mann sollte der Gassack härter abgestimmt sein als bei einem leichteren Fahrzeuginsassen, beispielsweise einer sogenannten 5%-Frau.

Des weiteren ist aus der DE 195 29 794 A1 bekannt, die in den Gassack eingeleitete Gasmenge mittels elektrischer Signale in Abhängigkeit von durch Sensoren erfasste Messgrößen auf den jeweiligen Lastfall einzustellen. Für eine derartige Steuerung ist jedoch eine aufwendig Elektronik notwendig.

Aus der gattungsbildenden DE 195 22 765 A1 ist eine Sicherheitsvorrichtung für ein Kraftfahrzeug mit einem Gasgenerator sowie einem im Falle eines Unfalls durch den Gasgenerator zu befüllenden Gassack bekannt. Der Gassack weist eine kanalförmige Abströmöffnung mit einem konstanten Querschnitt auf. Die Abströmöffnung ist im betriebsbereiten Zustand des Gassacks nach innen gestülpt und entfaltet sich erst beim Erreichen eines bestimmten Innendrucks im Gassack.

Auch die JP 08 268 213 A offenbart einen Gassack mit einer kanalförmigen Abströmöffnung. Die Abströmöffnung hat einen konstanten Querschnitt mit festen Maßen X und Y.

Aus der DE 297 20 462 U1 ist ein Gassack bekannt, dessen Abströmöffnung mit einer Gewebeschicht überspannt ist, die am Rand der Öffnung befestigt ist. Unter dem Einfluss des in dem Gassack herrschenden Innendruck wölbt sich diese Gewebeschicht nach außen und zieht dabei den Auslass zusammen.

Vor dem Hintergrund dieses Standes der Technik liegt der vorliegenden Erfindung die Aufgabe zugrunde, eine Sicherheitsvorrichtung für ein Kraftfahrzeug mit einem Gasgenerator sowie einem Gassack und mindestens einer Öffnung zu schaffen, bei der sich der Füllzustand des Gassacks auf einfache Weise zuverlässig und selbsttätig so auf den jeweiligen Lastfall einstellt, dass ein optimaler Schutz für Fahrzeuginsassen gewährleistet wird.

Diese Aufgabe wird durch eine Sicherheitsvorrichtung mit den Merkmalen des Anspruchs 1 gelöst.

Demnach zeichnet sich die erfindungsgemäße Sicherheitsvorrichtung für ein Kraftfahrzeug mit einem Gasgenerator und einem Gassack sowie mindestens einer Öffnung mit einem variablen Strömungswiderstand, durch die Gas strömen kann, dadurch aus, dass die Öffnung zumindest in Teilbereichen kanalförmig gestaltet ist und dass sich der Strömungswiderstand des kanalförmigen Teilbereichs in Abhängigkeit von der Geschwindigkeit des durch die Öffnung strömenden Gasstroms selbsttätig einstellt.

Wenn im Zusammenhang mit der Erfindung von "Öffnung" die Rede ist, so ist damit jede denkbare, an der Sicherheitsvorrichtung angeordnete Öffnung gemeint, durch die Gas strömt. Beispielsweise sei hier eine Öffnung direkt am Gasgenerator genannt, durch die Gas in eine Zuleitung zum Gassack strömt; oder eine Öffnung in der Zuleitung, durch die Gas vom oder zum Gassack strömt; oder eine Öffnung im Gassack selbst.

Die Erfindung macht sich die Gesetzmäßigkeit der Bernoullischen Druckgleichung zu eigen, nach der für strömende Fluide die Summe aus dem statischen, dem kinetischen und dem geodätischen Druck konstant ist. Mit anderen Worten besagt diese Druckgleichung, dass wenn eine dieser drei Größen zunimmt, die anderen entsprechend abnehmen.

Bezogen auf die Erfindung kann man den geodätischen Druck außer Betracht lassen, weil dieser konstant ist, so dass der erläuterte Zusammenhang entsprechend für den kinetischen und den statischen Druck gilt. Nimmt also der kinetische Druck zu, so nimmt der statische Druck ab. Wenn nun, wie bei der Erfindung die Öffnung zumindest in einem Teilbereich kanalförmig gestaltet ist, so dass sich in diesem ein statischer Druck ausbilden kann, der nicht sofort durch den Umgebungsdruck ausgeglichen wird, gilt für diesen Bereich die Bernoullische Druckgleichung. Nimmt in dem kanalförmigen Teilbereich der Öffnung die Geschwindigkeit des hindurchströmenden Gases und somit auch der kinetische Druck zu, so nimmt der statische Druck in dem kanalförmigen Teilbereich ab. Da bei der Erfindung der kanalförmige Strömungsquerschnitt variabel gestaltet ist, verringert er sich bei einer Verringerung des statischen Drucks. Eine Verringerung des Strömungsquerschnitts hat zur Folge, dass sich der Strömungswiderstand erhöht und somit weniger Gas entweichen kann. Die erfindungsgemäße Öffnung passt sich demnach automatisch der Unfallschwere und dem Insassen an.

Aufgrund der soeben beschriebenen Funktionsweise der Öffnung ergeben sich folgende Regelungsabläufe bei dem Einsatz der erfindungsgemäßen Sicherheitsvorrichtung, wenn es sich bei der Öffnung um eine Abströmöffnung handelt. Wird der Gassack stark beansprucht, beispielsweise bei einen starken Unfall oder durch ein hohes Gewicht eines Fahrzeuginsassen, so entsteht in dem Gassack ein hoher Druck, der eine hohe Strömungsgeschwindigkeit in der Öffnung zur Folge hat. Die hohe Strömungsgeschwindigkeit führt aufgrund der oben dargelegten Gesetzmäßigkeit zu einer Verengung des Strömungsquerschnitts der Öffnung, so dass weniger Gas austreten kann und der Airbag hart bleibt. Dies ist in den geschilderten Lastfällen - starker Unfall oder schwerer Fahrzeuginsasse - von Vorteil, weil ein harter Gassack mehr Energie absorbieren kann.

Wird der Gassack nicht so stark beansprucht, beispielsweise bei einem leichten Unfall oder durch ein leichtes Gewicht eines Fahrzeuginsassen, so entsteht in dem Gassack ein geringerer Druck. Dieser hat eine nicht so hohe Strömungsgeschwindigkeit zur Folge. Der Strömungsquerschnitt wird sich bei diesen Lastfällen nicht so stark verengen, so dass mehr Gas austreten kann, als bei den zuvor geschilderten Lastfällen und der Airbag sich weicher verhält. Das ist bei den geschilderten Lastfällen - leichter Unfall oder leichtes Gewicht - von Vorteil, weil es nicht notwendig ist so viel Energie zu absorbieren und ein zu harter Airbag den Insassen unnötig stark belasten würde.

Gemäß einer Ausführungsform weist die Öffnung die Form eines schlauchförmigen, elastischen Kanals auf. Diese Ausführungsform ist besonders vorteilhaft, weil sie wenig Platz beansprucht und somit zusammengefaltet einfach mit dem Gassack in ein Airbaggehäuse integriert werden kann. Eine solche Abströmöffnung ist zudem einfach herzustellen. Hinzu kommt, dass eine derart gestaltete Öffnung kein zusätzliches Verletzungsrisiko am entfalteten Gassack mit sich bringt, da sie nachgiebig und flexibel ist.

Die Seitenwände des Kanals können gasdurchlässig gestaltet sein; sie können beispielsweise eine Perforation aufweisen. Über die Stärke der Perforation kann die Menge des abströmenden Gases eingestellt und das gesamte System abgestimmt werden.

Die Öffnung kann direkt in den Gassack eingebracht werden. Es ist denkbar diese aus demselben Material zu fertigen, wie den Gassack selber, was wiederum fertigungstechnische Vorteile mit sich bringt. Die Öffnung kann aber auch im Bereich eines Verbindungselements zwischen Gasgenerator und Gassack eingebracht werden. Im letzteren Fall muss der Gassack nicht modifiziert werden. Es können herkömmliche Gassackformen verwendet werden. Die Öffnung kann aber auch am bzw. im Gasgenerator selbst angeordnet sein.

Gemäß einer weiteren Ausführungsform ist vor der Öffnung ein gegenüber der Sicherheitsvorrichtung beweglich angeordnetes, sich parallel zur der Ausrichtung der Öffnung erstreckendes Verschlusselement vorgesehen. Dieses kann beispielsweise die Form einer Platte haben, die sich über die Öffnung erstreckt. Die Abmessungen der Platte müssen größer sein als die der Öffnung selber, so dass die Platte mit den die Öffnung umgebenden Bereichen der Sicherheitsvorrichtung kanalförmige Bereiche bildet, in denen sich - wie in dem zuvor beschriebenen Ausführungsbeispiel - ein statischer Druck aufbauen kann. Aufgrund der Beweglichkeit des Verschlusselements gegenüber der Sicherheitsvorrichtung, ist der Strömungswiderstand der durch Verschlusselement und Sicherheitsvorrichtung gebildeten kanalförmigen Bereiche variabel. Auf diese Weise ist auch hier über die Bernoullische Druckgleichung eine Steuerung des Strömungswiderstandes möglich: bei hohen Strömungsgeschwindigkeiten entsteht in den kanalförmigen Bereichen ein Unterdruck, durch den das Verschlusselement an die Sicherheitseinrichtung herangezogen wird und sich der Strömungsquerschnitt verengt; bei geringeren Strömungsgeschwindigkeiten verhält sich die Situation genau andersherum.

Es ist möglich, das Verschlusselement über Federn mit der Sicherheitsvorrichtung zu verbinden, so dass der sich aufgrund der Strömungsgeschwindigkeit einstellende statische Druck gegen eine definierte Kraft arbeiten muss. Neben den Federn können auch Dämpfungselemente vorgesehen sein. Es ist aber auch jede andere Befestigung des Verschlusselements an der Sicherheitsvorrichtung denkbar, die die geschilderte Funktionsweise ermöglicht.

Gemäß einer weiteren Ausführungsform wird der kanalförmige Teilbereich der Öffnung durch mehrere im wesentlichen parallel ausgerichtete, sich senkrecht zu der Ausrichtung der Öffnung erstreckende Verschlusselemente gebildet. Diese senkrechten Verschlusselemente sind so ausgelegt, dass ihr Abstand zueinander variabel ist. Das kann dadurch erfolgen, dass die Verschlusselemente beweglich an der Sicherheitsvorrichtung, beispielsweise über Scharniere angelenkt sind. Sie können aber auch aus elastischem Material bestehen, so dass sich der Abstand zwischen den Verschlusselementen durch eine Deformation derselben verändert. Es ist auch denkbar, beide Varianten - Scharnier und elastisches Verschlusselement - miteinander zu kombinieren.

Bei den bisher beschriebenen Ausführungsbeispielen ist der Strömungswiderstand der Öffnung im wesentlichen direkt durch den Bernoulli-Effekt beeinflusst worden. Es ist aber auch denkbar, dass der Bernoulli-Effekt als Eingangsgröße für ein Steuerungssystem zur Steuerung des Strömungswiderstandes verwendet wird, wodurch die Modulation der Öffnung verstärkt werden kann.

Je nachdem wie die Sicherheitsvorrichtung ausgelegt ist, kann sie nur eine erfindungsgemäße Öffnung oder zusätzlich noch eine herkömmliche Öffnung mit im wesentlichen konstanten Querschnitt oder auch anders geartete Ein- bzw. Abströmvorrichtungen aufweisen.

Die Feinabstimmung des Systems kann außer über eine Perforation im kanalförmigen Bereich der Öffnung auch über spezielle Oberflächengestaltungen erzielt werden. Beispiele dafür sind in der Zeichnungsbeschreibung aufgeführt. Feinabstimmungen sind ebenfalls durch die Strömung oder den Druck beeinflussende Maßnahmen, wie z.B. Form, Matrial, Geometrie oder Anzahl der Abströmöffnungenen möglich.

Die Öffnung kann auch Mittel aufweisen, die eine minimale Leckage in der Öffnung sicher stellen, wie beispielsweise Abstandshalter.

Es ist denkbar, das erfindungsgemäße Prinzip sowohl beim Befüllen eines Gassacks als auch beim Abströmen einzusetzen. In einem solchen Fall ist nicht die Abström- sondern die Zuströmöffnung so gestaltet, dass sich der Strömungswiderstand in Abhängigkeit von der Geschwindigkeit des durch die Zuströmöffnung strömenden Gasstroms einstellt.

Es ist auch denkbar, die Charakteristik bzw. die Kennlinie oder das Verhalten der Öffnung in Abhängigkeit von der Strömungsrichtung - Befüllung oder Abströmung - aus geführt werden kann. Zum Beispiel kann ein strömungsrichtungsgesteuerter Hebel die Abstimmung des Systems ändern. Hierzu zählt auch, daß zusätzliche Öffnungen (z.B. zum Zu- oder Abströmen) strömungsrichtungsabhängig geöffnet oder geschlossen werden können.

Im folgenden wird die Erfindung anhand der in der Zeichnung dargestellten Ausführungsbeispiele des näheren erläutert. Es zeigen:
- Fig. 1:: eine erfindungsgemäße Sicherheitsvorrichtung mit einem schlauchförmigen Abströmkanal;
- Fig. 2:: eine Sicherheitsvorrichtung gemäß Fig. 1, bei der der Abströmkanal perforiert ist;
- Fig. 3:: eine Sicherheitsvorrichtung gemäß Fig. 1, bei der der Abströmkanal entlang seiner Längserstreckung lösbar mit dem Gassack verbunden ist;
- Fig. 4:: eine erfindungsgemäße Sicherheitsvorrichtung, bei dem die Abströmöffnung in einem Verbindungselement zwischen Gasgenerator und Gassack angeordnet ist und ein sich parallel zu der Ausrichtung der Abströmöffnung angeordnetes Verschlusselement aufweist;
- Fig. 5:: eine Sicherheitsvorrichtung gemäß Fig. 4 mit mehreren sich senkrecht zur Ausrichtung der Abströmöffnung erstreckenden Verschlusselementen un
- Fig. 6: einen Abstandshalter für eine erfindungsgemäße Abströmöffnung.

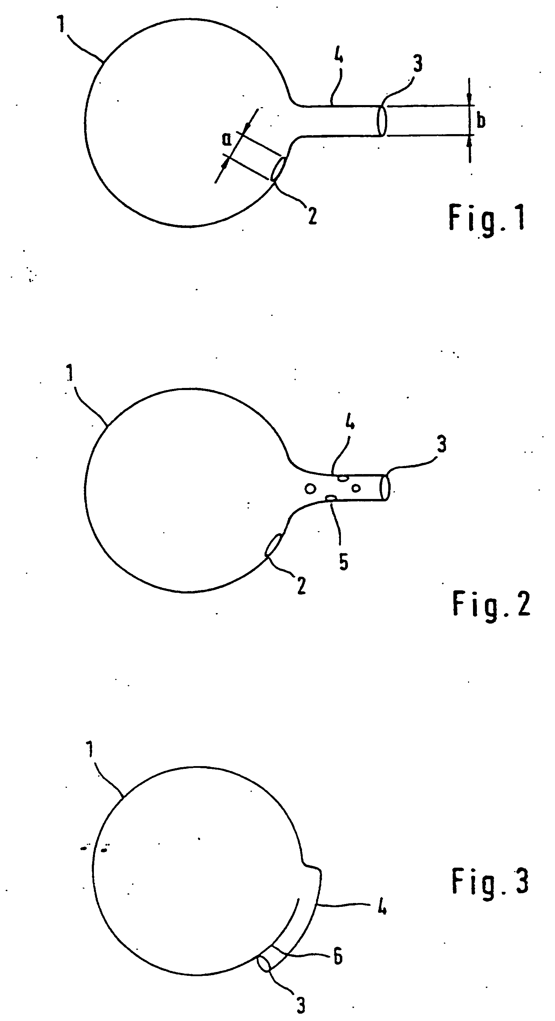

In Fig. 1 ist ein Gassack 1 einer erfindungsgemäßen Sicherheitsvorrichtung dargestellt. Ein ebenfalls zu der Sicherheitsvorrichtung gehörender Gasgenerator wurde aus Übersichtlichkeitsgründen nicht dargestellt. Der Gassack 1 ist mit einer Abströmöffnung 2 ausgestattet, deren Strömungsquerschnitt a im wesentlichen konstant ist. Der Gassack 1 weist eine weitere Abströmöffnung 3 auf. Diese hat die Form eines schlauchförmigen, elastischen Kanals 4. Dadurch, dass der Kanal 4 elastisch ausgeführt ist, ist der Strömungsquerschnitt b in seiner Größe variabel. Die Abströmöffnung 2 dient dazu das Gesamtsystem abzustimmen.

Strömt nun Gas aus dem Inneren des Gassacks 1 durch die Abströmöffnungen 2 und 3 hinaus, so bleibt die Größe des Strömungsquerschnitts a konstant. Die Größe des Strömungsquerschnitts b stellt sich nach der Bernoullischen Druckgleichung in Abhängigkeit der Strömungsgeschwindigkeit ein. Bei einer hohen Ausströmgeschwindigkeit zieht sich der Kanal 4 selbsttätig zusammen und bei einer niedrigeren Ausströmgeschwindigkeit weitet er sich selbsttätig wieder. Dadurch wird die Abströmöffnung 3 automatisch entsprechend einem eingetretenen Lastfall eingestellt und der Gassack 1 verhält sich ideal auf diesen Lastfall abgestimmt.

Das in Fig. 2 dargestellte Ausführungsbeispiel unterscheidet sich von dem der Fig. 1 dadurch, dass in den Kanal 4 mehrere Löcher 5 eingebracht sind. Über die Anzahl und die Größe der Löcher 5 kann das Gesamtsystem noch feiner abgestimmt werden.

In Fig. 3 ist ein erfindungsgemäßes Sicherheitssystem dargestellt, bei dem der Kanal 4 entlang seiner Längserstreckung mit einer Reißnaht 6 an dem Gassack 1 befestigt ist. Wenn die Reißnaht 6 auch die Öffnung 3 des Kanals 4 verschließt und sich erst bei aufgeblasenem Gassack 1 löst, dann ist die Abströmöffnung 3 zu Beginn des Aufblasvorgangs des Gassacks 1 geschlossen, so dass eine geringere Leckrate beim Aufblasvorgang erzielt wird. Dadurch kann der Gassack schneller aufgeblasen und seine schützende Wirkung schneller zum Einsatz kommen. In Fig. 3 ist der Zustand dargestellt, in dem der Gassack 1 gerade aufgeblasen wird und noch kein oder nur sehr wenig Gas aus der Abströmöffnung 3 tritt. Der gleiche Effekt lässt sich dann erreichen, wenn der Kanal 4 so in den Gassack eingefaltet ist, dass die Abströmöffnung 3 erst bei entfaltetem Gassack geöffnet ist. Es ist auch denkbar dieselbe Funktion über ein in den Kanal 4 eingebrachtes Labyrinth oder Serpentinen zu erzielen. Der Kanal 4 kann auch zu Beginn des Aufblasvorgangs durch ein Verschluss aus dehnfähigem Material verschlossen sein, welches den Kanal 4 erst bei einem gewissen Mindestdruck im Gassack 1 freigibt.

Wenn bei den zuvor beschriebenen Ausführungsbeispielen der Kanal 4 gekrümmt ausgeführt wird oder die Abströmöffnung das Gas seitlich ablenkt, so lenken sich das ausströmende Gas und der Kanal 4 gegenseitig ab. Das bewirkt ein Abknicken des Kanals 4, wodurch sich dessen Strömungswiderstand erhöht. Dadurch wird der aufgrund der Bernoullischen Druckgleichung auftretende Effekt, nämlich dass sich der Strömungsquerschnitt bei erhöhter Strömungsgeschwindigkeit verringert und somit der Strömungswiderstand erhöht, so dass weniger Gas entweicht, noch verstärkt. Den selben Effekt erzielt man, wenn man den Kanal 4 so gestaltet, dass er ab einer bestimmten Strömungsgeschwindigkeit anfängt zu flattern bzw. pulsieren. Diese Bewegungen des Kanals 4 erhöhen ebenfalls den Strömungswiderstand.

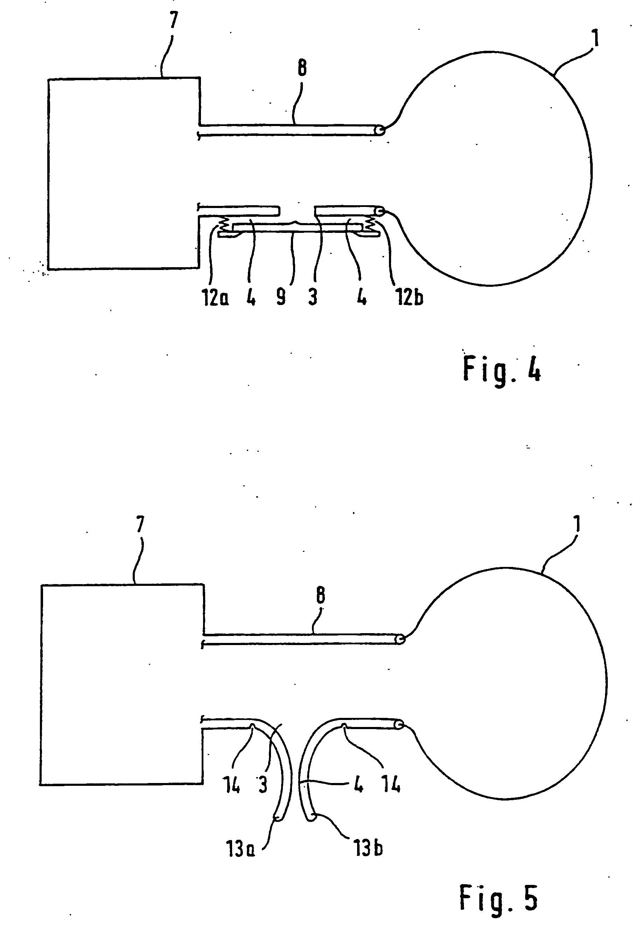

In Fig. 4 sind neben dem Gassack 1 ein Gasgenerator 7 sowie ein Verbindungselement 8 zwischen Gasgenerator 7 und Gassack 1 dargestellt. Den zuvorbeschriebenen Ausführungsbeispielen entsprechende Bauteile sind mit gleichen Bezugszeichen versehen. In diesem Ausführungsbeispiel ist die variable Abströmöffnung 3 nicht an den Gassack 1 selber sondern in das Verbindungselement 8 zwischen Gasgenerator 7 und Gassack 8 eingebracht. Vor der Abströmöffnung 3 ist eine als Verschlusselement fungierende Platte 9 angeordnet. Die Platte ist gegenüber dem Verbindungselement 8 beweglich gelagert - und zwar über Federn 12a und 12b - und so ausgerichtet, dass sie sich im wesentlichen parallel zu der Abströmöffnung 3 erstreckt. Die Federn 12a und 12b können entsprechend dem jeweiligen Anwendungsfall gedämpft oder ungedämpft ausgeführt sein. Über die Stärke der Federn und der Dämpfung lässt sich auf besonders einfache Weise der Zusammenhang zwischen Strömungsgeschwindigkeit und Strömungsquerschnitt einstellen. Die Außenseiten des Verbindungselements 8 bilden mit der Platte 9 kanalförmige Durchgänge 4. In diesen Durchgängen 4 kann sich ein statischer Druck einstellen, so dass auf diesen Strömungsbereich beim Abströmen von in dem Gassack 1 befindlichen Gas wiederum die Bernoulligleichung anwendbar ist. Je nach Strömungsgeschwindigkeit in den Durchgängen 4 entsteht in diesen ein gewisser statischer Druck, durch den die Platte 9 entweder auf die Abströmöffnung 3 zu oder von dieser weg bewegt wird, wodurch der Strömungsquerschnitt der Durchgänge 4 eingestellt wird.

Das in Fig. 5 dargestellte Ausführungsbeispiel unterscheidet sich von dem in Fig. 4 dargestellten dadurch, dass nicht eine im wesentlichen parallel zur Ausrichtung der Abströmöffnung 3 ausgerichtete Platte 9, sondern zwei im wesentlichen senkrecht zur Ausrichtung der Abströmungsöffnung 3 ausgerichtete als Verschlusselemente dienende Platten 13a und 13b vorgesehen sind. Die Platten 13a und 13b bilden den kanalförmigen Teilbereich 4 der Abströmöffnung 3. Sie können - beispielsweise über Scharniere 14 - gelenkig an dem Verbindungselement 8 angelenkt sein. Sie können aber auch selber elastisch gestaltet sein. Durch diese beiden Varianten wird eine Veränderung des Strömungsquerschnitts des kanalförmigen Bereichs 4 gewährleistet, der wiederum durch die Strömungsgeschwindigkeit automatisch eingestellt wird.

Auch in den beiden zuletzt geschilderten Ausführungsbeispielen ist es denkbar, dass neben einer erfindungsgemäßen Abströmöffnung 3 eine Abströmöffnung mit im wesentlichen konstanten Strömungsquerschnitt vorgesehen ist. Des weiteren können an einer Sicherheitsvorrichtung auch mehrere Abströmöffnungen 3 mit variablen Querschnitt vorgesehen sein. Auch eine Kombination mit bekannten Abströmventilen bzw. Abströmöffnungen ist denkbar.

Um die erfindungsgemäße Sicherheitsvorrichtung optimal auf den jeweiligen Anwendungsfall auszulegen, können bei allen Ausführungsbeispielen auf den Innenflächen des kanalförmigen Teilbereichs 4 der Abströmöffnung 3 verschiedene Beschichtungen bzw. Oberflächenstrukturen vorgesehen sein. Denkbar sind eine Haifischhaut-Struktur, eine Golfball-Oberfläche, starke Gewebestrukturen oder die schon erwähnten Perforationen. Diese müssen genau ausgelegt werden, um die Strömung für den Lastfall zu optimieren. Des weiteren kann der kanalförmige Teilbereich 4 durch seine Form strömungstechnisch optimiert werden, beispielsweise durch abgerundete Kanten etc..

Zur Verstärkung des zunehmenden Strömungswiderstandes bei zunehmender Strömungsgeschwindigkeit können auch strömungsstörende Maßnahmen vorgesehen sein, die beispielsweise bei Unterschreiten eines gewissen statischen Drucks ausgelöst werden. Besonders effektiv sind solche strömungsstörenden Maßnahmen dann, wenn sie eine turbulente Strömung erzeugen und dadurch den Strömungswiderstand sprunghaft erhöhen. Dadurch wird eine sprunghafte Variation des austretenden Gasstroms erzielt.

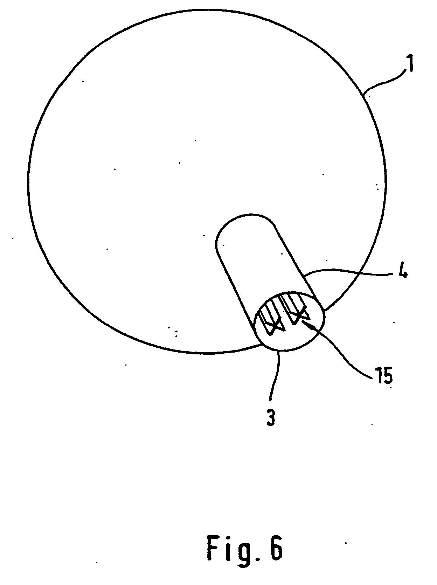

In Fig. 6 ist ein Abstandshalter 15 für eine Abströmöffnung 3 dargestellt. Dieser Abstandshalter 15 gewährleistet, dass die Abströmöffnung immer soweit geöffnet ist, dass noch Luft aus dem Gassack 1 entweichen kann. Die Abstandshalter 15 sind in Fig. 6 kreuzförmig ausgeführt. Ist aber auch jede andere Ausführungsform der Abstandshalter 15 denkbar, die geschilderte Funktion erfüllt.

Die beschriebenen Öffnungsgestaltungen können an allen denkbaren Öffnung in bzw. an der Sicherheitsvorrichtung vorgesehen sein.

## Patentansprüche

1. Sicherheitsvorrichtung für ein Kraftfahrzeug mit einem Gasgenerator sowie einem im Falle eines Unfalls durch den Gasgenerator zu befüllenden Gassack (1) wobei dem Gassack (1) mindestens eine Abströmöffnung (2) zugeordnet ist, die zumindest in einem Teilbereich kanalförmig (4) ausgeführt ist und sich der Strömungswiderstand des kanalförmigen Teilbereichs (4) in Abhängigkeit von der Geschwindigkeit des durch die Abströmöffnung (3) austretenden Gasstroms selbstständig einstellt,
**dadurch gekennzeichnet,**
**dass** der Strömungsquerschnitt (b) der Abströmöffnung (3) variabel ist und mit zunehmender Geschwindigkeit des durch die Abströmöffnung (3) austretenden Gasstroms ab- und mit abnehmender Strömungsgeschwindigkeit zunimmt, wodurch der Strömungswiderstand entsprechend zu- beziehungsweise abnimmt.

2. Sicherheitsvorrichtung nach Annspruch 1,
**dadurch gekennzeichnet,**
**dass** die Öffnung (3) die Form eines schlauchförmigen, elastischen Kanals (4) aufweist.

3. Sicherheitsvorrichtung nach Anspruch 1 oder 2,
**dadurch gekennzeichnet,**
**dass** vor der Öffnung (3) ein bewegliches, sich parallel zu der Ausrichtung der Öffnung (3) erstreckendes Verschlusselement (9) angeordnet ist, welches mit den die Öffnung (3) umgebenden Bereichen der Sicherheitsvorrichtung den kanalförmigen Teilbereich (4) der Öffnung (3) bildet.

4. Sicherheitsvorrichtung nach Anspruch 3,
**dadurch gekennzeichnet,**
**dass** das Verschlusselement (9) federbeaufschlagt ist.

5. Sicherheitsvorrichtung nach Anspruch 1,
**dadurch gekennzeichnet,**
**dass** vor der Öffnung (3) mindestens zwei im wesentlichen parallel ausgerichtete, sich senkrecht zur Ausrichtung der Öffnung (3) erstreckende Verschlusselemente (13a, 13b) angebracht sind, welche den kanalförmigen Teilbereich (4) der Öffnung (3) bilden.

6. Sicherheitsvorrichtung nach Anspruch 5,
**dadurch gekennzeichnet,**
**dass** die Verschlusselemente (13a, 13b) beweglich gelagert sind.

7. Sicherheitsvorrichtung nach Anspruch 5 oder 6,
**dadurch gekennzeichnet,**
**dass** die Verschlusselemente (13a, 13b) elastisch ausgeführt sind.

8. Sicherheitsvorrichtung nach Anspruch 1,
**dadurch gekennzeichnet,**
**dass** der durch die Bernoullische Druckgleichung auftretende Effekt in dem kanalförmigen Teilbereich (4) als Eingangsgröße für einen Steuerprozeß zum Einstellen des Strömungswiderstandes verwendet wird.

9. Sicherheitsvorrichtung nach einem der vorhergehenden Ansprüche,
**dadurch gekennzeichnet,**
**dass** die Seitenwände des kanalförmigen Teilbereichs (4) gasdurchlässig sind.

10. Sicherheitsvorrichtung nach einem der vorhergehenden Ansprüche,
**dadurch gekennzeichnet,**
**dass** die Seitenwände des kanalförmingen Teilbereichs (4) perforiert sind und/oder ihre Innenflächen eine spezielle Oberflächengestaltung aufweisen.

11. Sicherheitsvorrichtung nach einem der vorhergehenden Ansprüche,
**dadurch gekennzeichnet,**
**dass** die Öffnung (3) in den Gassack (1) eingebracht ist.

12. Sicherheitsvorrichtung nach einem der vorhergehenden Ansprüche,
**dadurch gekennzeichnet,**
**dass** die Öffnung (3) im Bereich eines Verbindungselements (8) zwischen Gasgenerator (7) und Gassack (1) angeordnet ist.

13. Sicherheitsvorrichtung nach einem der vorhergehenden Ansprüche,
**dadurch gekennzeichnet,**
**dass** die Öffnung (3) in den Gasgenerator (7) eingebracht ist.

14. Sicherheitsvorrichtung nach einem der vorhergehenden Ansprüche,
**dadurch gekennzeichnet,**
**dass** die Sicherheitsvorrichtung neben der sich selbststtätig einstellenden Öffnung (3) eine herkömmliche Öffnung (2) mit im wesentlichen konstanter Größe oder anders geartete Öffnungen aufweist.

15. Sicherheitsvorrichtung nach einem der vorhergehenden Ansprüche,
**dadurch gekennzeichnet,**
**dass** in der sich selbstständig einstellenden Öffnung (3) Mittel vorgesehen sind, die eine minimale Leckage sicherstellen.

16. Sicherheitsvorrichtung nach einem der vorhergehenden Ansprüche,
**dadurch** gekennzeichet,
dass die Charakteristik bzw. Kennlinie oder das Verhalten der sich selbstständig einstellenden Öffnung (3) in Abhängigkeit von der Strömungsrichtung unterschiedlich ausgeführt wird.

## Claims

1. Safety device for a vehicle with a gas generator and an air bag (1) to be filled in the case of an accident, whereby the air bag (1) has at least one outlet (2), which is, at least for part of its extension, implemented in the form of a tube (4), associated with it, and which independently sets the resistance to flow of the tube section (4) on the basis of the speed of the gas flow coming from the outlet (3),
**characterized in that**
the cross-sectional area of flow (b) of the outlet (3) is variable and decreases with increasing speed of the flow of gas coming through the outlet (3) and increases with decreasing flow, whereby the resistance to flow accordingly decreases or increases.

2. Safety device in accordance with claim 1,
**characterized in that**
the aperture (3) is in the form of a tubular, elastic channel (4).

3. Safety device in accordance with claim 1 or 2,
**characterized in that**
a movable closing element (9), which extends parallel to the alignment of the aperture (3) and which forms, with the areas surrounding the aperture (3), the safety device of the conduit form section (4), is disposed in front of the aperture (3).

4. Safety device in accordance with claim 3,
**characterized in that**
the closing element (9) is spring loaded.

5. Safety device in accordance with claim 1,
**characterized in that**
at least two substantially parallel closing elements (13a, 13b), which form the conduit-type section (4) of the aperture (3) and extend vertically in relation to the aperture (3), are mounted in front of the aperture (3).

6. Safety device in accordance with claim 5,
**characterized in that**
the closing elements (13a, 13b) are supported such that they can move.

7. Safety device in accordance with claims 5 or 6,
**characterized in that**
the closing elements (13a, 13b) are flexible or elastic.

8. Safety device in accordance with claim 1,
**characterized in that**
the effect, in the conduit-form section (4), arising through pressure equalization in accordance with the Bernoulli theorem, is used as an input parameter for the control process for setting the resistance to flow.

9. Safety device in accordance with one of the preceding claims,
**characterized in that**
the sides of the conduit-form section (4) are permeable to gas.

10. Safety device in accordance with one of the preceding claims,
**characterized in that**
the sides of the conduit-form section (4) are perforated and/or their inner surfaces have a special surface form.

11. Safety device in accordance with one of the preceding claims,
**characterized in that**
the aperture (3) is inserted into the airbag (1).

12. Safety device in accordance with one of the preceding claims,
**characterized in that**
the aperture (3) is disposed in the area of a connection element (8) between the gas generator (7) and the airbag (1).

13. Safety device in accordance with one of the preceding claims,
**characterized in that**
the aperture (3) is in the gas generator (7).

14. Safety device in accordance with one of preceding claims,
**characterized in that**
the safety device has, in addition to the self-adjusting aperture (3), a conventional aperture (2) of substantially constant size, or otherwise formed openings.

15. Safety device in accordance with one of the preceding claims,
**characterized in that**
means are provided in the self-adjusting aperture (3) that ensure minimal leaking.

16. Safety device in accordance with one of the preceding claims,
**characterized in that**
the characteristic, characteristic curve or behaviour of the self-adjusting aperture (3) is differently implemented on the basis on the direction of flow.

## Revendications

1. Dispositif de sécurité pour un véhicule automobile, avec un générateur de gaz et un coussin de gaz (1) qui sera rempli par ledit générateur de gaz dans le cas d'un accident, une ouverture de déflexion (2) au moins étant imputée au coussin de gaz (1), laquelle est exécutée au moins dans un secteur partiel (4) en forme de canal, la résistance à l'écoulement dudit secteur partiel (4) en forme de canal se réglant automatiquement en fonction de la vitesse du courant de gaz sortant de l'ouverture de déflexion (3),
**caractérisé en ce que**
la section de l'écoulement (b) de l'ouverture de déflexion (3) est variable, qu'elle se réduit lorsque la vitesse du courant de gaz sortant de l'ouverture de déflexion (3) augmente et qu'elle devient plus grande lorsque la vitesse d'écoulement diminue, ce qui fait que la résistance d'écoulement augmente dans des proportions équivalentes et, respectivement, diminue.

2. Dispositif de sécurité selon la revendication 1, **caractérisé en ce que** l'ouverture (3) présente la forme d'un canal élastique (4) en forme de tuyau.

3. Dispositif de sécurité selon la revendication 1 ou 2, **caractérisé en ce qu'**un élément de fermeture mobile (9) est disposé devant l'ouverture (3), lequel élément se déplace de manière parallèle par rapport à l'alignement de ladite ouverture (3) et forme avec les zones entourant l'ouverture (3) dudit dispositif de sécurité le secteur partiel (4) en forme de canal de l'ouverture (3).

4. Dispositif de sécurité selon la revendication 3, **caractérisé en ce que** l'élément de fermeture (9) est commandé par ressort.

5. Dispositif de sécurité selon la revendication 1, **caractérisé en ce que** deux éléments de fermeture (13a, 13b) au moins, alignés de manière essentiellement parallèle et s'étendant verticalement par rapport à l'alignement de l'ouverture (3) sont disposés devant l'ouverture (3), lesdits éléments de fermeture formant le secteur partiel (4) en forme de canal de ladite ouverture (3).

6. Dispositif de sécurité selon la revendication 5, **caractérisé en ce que** les éléments de fermeture (13a, 13b) sont logés de façon mobile.

7. Dispositif de sécurité selon la revendication 5 ou 6, **caractérisé en ce que** les éléments de fermeture (13a, 13b) sont exécutés de manière élastique.

8. Dispositif de sécurité selon la revendication 1, **caractérisé en ce que** l'effet de pression se présentant dans le secteur partiel (4) en forme de canal du fait de l'équation de Bernoulli est utilisé comme grandeur d'entrée pour un process contrôle destiné au réglage de la résistance à l'écoulement.

9. Dispositif de sécurité selon l'une quelconque des revendications précédentes, **caractérisé en ce que** les parois latérales du secteur partiel (4) en forme de canal est perméable au gaz.

10. Dispositif de sécurité selon l'une quelconque des revendications précédentes, **caractérisé en ce que** les parois latérales du secteur partiel (4) en forme de canal sont perforées et/ou **que** leurs surfaces intérieures présentent une configuration particulière.

11. Dispositif de sécurité selon l'une quelconque des revendications précédentes, **caractérisé en ce que** l'ouverture (3) est pratiquée dans le coussin de gaz (1).

12. Dispositif de sécurité selon l'une quelconque des revendications précédentes, **caractérisé en ce que** l'ouverture (3) est disposée dans la zone d'un élément de raccordement (8), entre le générateur de gaz (7) et le coussin de gaz (1).

13. Dispositif de sécurité selon l'une quelconque des revendications précédentes, **caractérisé en ce que** l'ouverture (3) est pratiquée dans le générateur de gaz (7).

14. Dispositif de sécurité selon l'une quelconque des revendications précédentes, **caractérisé en ce que** ledit dispositif de sécurité comporte; à côté de l'ouverture (3) à réglage automatique, une ouverture (2) traditionnelle de dimension essentiellement constante ou des ouvertures de nature différente.

15. Dispositif de sécurité selon l'une quelconque des revendications précédentes, **caractérisé en ce que dans** l'ouverture (3) à réglage automatique sont prévus des moyens assurant une fuite minimum.

16. Dispositif de sécurité selon l'une quelconque des revendications précédentes, **caractérisé en ce que** la courbe caractéristique ou le comportement de l'ouverture (3) à réglage automatique est exécuté(e) de façon différente, compte tenu du sens de l'écoulement.
